(19) Europäisches Patentamt
European Patent Office
Office européen des brevets

(11) **EP 2 432 836 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **10721422.3**

(22) Anmeldetag: **10.05.2010**

(51) Int Cl.:
*C08F 220/06* (2006.01)   *C08F 2/00* (2006.01)
*C09D 4/00* (2006.01)   *B01J 19/00* (2006.01)
*C08J 3/00* (2006.01)

(86) Internationale Anmeldenummer:
**PCT/EP2010/056316**

(87) Internationale Veröffentlichungsnummer:
**WO 2010/133460 (25.11.2010 Gazette 2010/47)**

(54) **BESCHICHTUNGSVERFAHREN FÜR WASSERABSORBIERENDE POLYMERPARTIKEL**

COATING PROCESS FOR WATER-ABSORBENT POLYMER PARTICLES

PROCÉDÉ DE REVÊTEMENT POUR PARTICULES POLYMÈRES HYDROPHILES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.05.2009 EP 09160523**

(43) Veröffentlichungstag der Anmeldung:
**28.03.2012 Patentblatt 2012/13**

(73) Patentinhaber: **BASF SE**
**67056 Ludwigshafen (DE)**

(72) Erfinder:
• **STUEVEN, Uwe**
**65812 Bad Soden (DE)**
• **FUNK, Rüdiger**
**65527 Niedernhausen (DE)**
• **WEISMANTEL, Matthias**
**63637 Jossgrund (DE)**
• **BARTHEL, Holger**
**68723 Oftersheim (DE)**
• **STEPHAN, Oskar**
**68766 Hockenheim (DE)**

(56) Entgegenhaltungen:
EP-A2- 0 343 919     EP-A2- 0 450 923
WO-A1-2004/037900    WO-A1-2007/065840
DE-A1- 19 813 443

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Beschichtungsverfahren, wobei in einem Horizontalmischer eine wässrige Flüssigkeit auf oberflächennachvernetzte wasserabsorbierende Polymerpartikel aufgesprüht wird und die produktberührte Innenwand des Horizontalmischers aus einem nichtrostenden Stahl ist.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm$^2$ (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 63,0 g/cm$^2$ (AUL0.9psi), werden wasserabsorbierende Polymerpartikel im allgemeinen oberflächennachvernetzt. Dadurch steigt der Vernetzungsgrad der Partikeloberfläche, wodurch die Absorption unter einem Druck von 63,0 g/cm$^2$ (AUL0.9psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet, thermisch oberflächennachvernetzt und getrocknet. Dazu geeignete Vernetzer sind Verbindungen, die mit mindestens zwei Carboxylatgruppen der wasserabsorbierenden Polymerpartikel kovalente Bindungen bilden können.

Die Oberflächennachvernetzer werden üblicherweise als wässrige Lösung auf das Grundpolymer aufgebracht. Das auf die Partikeloberfläche aufgebrachte Wasser diffundiert allerdings nur langsam in das Partikelinnere. Gleichzeitig senkt das Wasser die Glasübergangstemperatur der Polymere, die Partikeloberfläche wird klebrig. Daher können beim Einmischen der wässrigen Lösung des Oberflächennachvernetzers in das Grundpolymer unerwünschte Agglomerate und Anbackungen entstehen. Zur Lösung dieses Problems wird die Verwendung von Hochgeschwindigkeitsmischern mit wasserabweisenden Beschichtungen vorgeschlagen, beispielsweise in EP 0 450 923 A2 und DE 10 2004 026 934 A1.

Die wasserabsorbierenden Polymerpartikel weisen nach der thermischen Oberflächennachvernetzung oft einen Feuchtegehalt von weniger als 1 Gew.-% auf. Dadurch Erhöht sich die Neigung der Polymerpartikel zur statischen Aufladung. Die statische Aufladung der Polymerpartikel beeinflusst die Dosiergenauigkeit beispielsweise bei der Windelherstellung. Dieses Problem wird üblicherweise durch Einstellung eines definierten Feuchtegehalts durch Zusatz von Wasser oder wässrigen Lösungen gelöst (Nachbefeuchtung).

Verfahren zur Nachbefeuchtung werden beispielsweise in WO 98/49221 A1 und EP 0 780 424 A1 offenbart.

Zur weiteren Verbesserung der Permeabilität (SFC) kann die Partikeloberfläche weiter modifiziert werden, beispielsweise durch Beschichtung mit anorganischen inerten Substanzen, kationischen Polymeren und/oder Lösungen mehrwertiger Metallkationen.

Derartige Beschichtungen werden beispielsweise in WO 2008/113788 A2, WO 2008/113789 A1 und WO 2008/113790 A1 beschrieben.

WO 2004/037900 A1, DE 198 13 443 A1, WO 2007/065840 A1, EP 450 923 A2 und EP 343 919 A2 betreffen verschiedene Superabsorber und Verfahren zu ihrer Herstellung.

Aufgabe der vorliegenden Erfindung war die Bereitstellung eines Verfahrens zur Beschichtung oberflächennachvernetzter wasserabsorbierender Polymerpartikel mit Wasser oder wässrigen Lösungen, insbesondere eine gleichmäßige Beschichtung, ein geringer Staubanteil und wenig Agglomerate.

Gelöst wurde die Aufgabe durch ein Verfahren zur Herstellung wasserabsorbierender Polymerpartikel durch Polymerisation einer Monomerlösung oder -suspension, enthaltend

 a) mindestens ein ethylenisch ungesättigtes, säuregruppentragendes Monomer, das zumindest teilweise neutralisiert sein kann,
 b) mindestens einen Vernetzer,
 c) mindestens einen Initiator,
 d) optional ein oder mehrere mit den unter a) genannten Monomeren copolymerisierbare ethylenisch ungesättigte Monomere und
 e) optional ein oder mehrere wasserlösliche Polymere,

umfassend Trocknung, Mahlung, Klassierung, und Oberflächennachvernetzung, wobei in einem kontinuierlichen Horizontalmischer mit bewegten Mischwerkzeugen mittels mindestens einer Sprühdüse eine wässrige Flüssigkeit auf die oberflächennachvernetzten wasserabsorbierenden Polymerpartikel aufgesprüht wird, dadurch gekennzeichnet, dass die produktberührte Innenwand des Mischers gegenüber Wasser einen Randwinkel von weniger als 80° aufweist.

Mischer mit rotierenden Mischwerkzeugen werden gemäß der Lage der Rotationsachse in Vertikalmischer und Horizontalmischer unterteilt.

Horizontalmischer im Sinne dieser Erfindung sind Mischer mit rotierenden Mischwerkzeugen deren Lage der Rotationsachse zur Produktstromrichtung um weniger als 20°, vorzugsweise um weniger als 15°, besonders bevorzugt um weniger als 10°, ganz besonders bevorzugt um weniger als 5°, von der Horizontalen abweicht.

Im erfindungsgemäßen Verfahren können alle dem Fachmann bekannten Horizontalmischer mit bewegten Mischwerkzeugen, wie Schneckenmischer, Scheibenmischer, Pflugscharmischer, Schaufelmischer, Schraubenbandmischer und Durchlaufmischer, eingesetzt werden. Die wässrige Flüssigkeit kann sowohl in Hochgeschwindigkeitsmischern als auch in Mischern mit geringer Rührgeschwindigkeit aufgesprüht werden. Ein bevorzugter Horizontalmischer ist der Durchlaufmischer.

Die Innenwand des Mischers weist gegenüber Wasser einen Randwinkel von vorzugsweise weniger als 70°, besonders bevorzugt von weniger als 60°, ganz besonders bevorzugt von weniger als 50°, auf. Der Randwinkel ist ein Maß für das Benetzungsverhalten und wird gemäß DIN 53900 gemessen.

Vorteilhaft werden im erfindungsgemäßen Verfahren Mischer eingesetzt, deren produktberührte Innenwand aus einem nichtrostenden Stahl ist. Nichtrostende Stähle weisen üblicherweise einen Chromgehalt von 10,5 bis 13 Gew.-% Chrom auf. Der hohe Chromanteil führt zu einer schützenden Passivierung aus Chromdioxid an der Stahloberfläche. Weitere Legierungsbestandteile erhöhen die Korrosionsbeständigkeit und verbessern die mechanischen Eigenschaften.

Besonders geeignete Stähle sind austenitische Stähle mit beispielsweise mindestens 0,08 Gew.-% Kohlenstoff. Vorteilhaft enthalten die austenitischen Stähle neben Eisen, Kohlenstoff, Chrom, Nickel und optional Molybdän noch weitere Legierungsbestandteile, vorzugsweise Niob oder Titan.

Die bevorzugten nichtrostenden Stähle sind Stähle mit der Werkstoffnummer 1.45xx gemäß der DIN EN 10020, wobei xx eine natürliche Zahl zwischen 0 und 99 sein kann. Besonders bevorzugte Werkstoffe sind die Stähle mit den Werkstoffnummern 1.4541 und 1.4571, insbesondere Stahl mit der Werkstoffnummer 1.4571.

Vorteilhaft ist die produktberührte Innenwand des Mischers poliert. Polierte nichtrostende Stahloberflächen weisen eine niedrigere Rauhigkeit und einen niedrigeren Randwinkel gegenüber Wasser auf als matte oder aufgeraute Stahloberflächen.

Der vorliegenden Erfindung liegt die Erkenntnis zugrunde, dass sich nicht oberflächennachvernetzte wasserabsorbierende Polymerpartikel (Grundpolymere) und oberflächennachvernetzte wasserabsorbierende Polymerpartikel beim Mischen mit wässrigen Flüssigkeiten deutlich unterschiedlich verhalten.

Bei Zugabe von Wasser nimmt die Klebrigkeit oberflächennachvernetzter wasserabsorbierender Polymerpartikel möglicherweise weniger stark zu als die Klebrigkeit nicht oberflächennachvernetzter wasserabsorbierender Polymerpartikel (Grundpolymere). Daher ist der Einsatz von Mischern mit wasserabweisenden inneren Oberflächen bei der Beschichtung oberflächennachvernetzter wasserabsorbierender Polymerpartikel nicht notwendig; Anbackungen sind üblicherweise nicht zu befürchten.

Außerdem können sich kleine Wassertropfen auf wasserabweisenden Oberflächen leichter zu größeren Tropfen vereinigen. Dies führt möglicherweise zu einer ungleichmäßigeren Verteilung der wässrigen Flüssigkeit.

Die Temperatur der dem Mischer zugeführten wasserabsorbierenden Polymerpartikel beträgt vorzugsweise von 40 bis 80°C, besonders bevorzugt von 45 bis 75°C, ganz besonders bevorzugt von 50 bis 70°C.

Die Verweilzeit im Mischer beträgt vorzugsweise von 1 bis 180 Minuten, besonders bevorzugt von 2 bis 60 Minuten, ganz besonders bevorzugt von 5 bis 20 Minuten.

Die Umfangsgeschwindigkeit der Mischwerkzeuge beträgt vorzugsweise von 0,1 bis 10 m/s, besonders bevorzugt von 0,5 bis 5 m/s, ganz besonders bevorzugt von 0,75 bis 2,5 m/s.

Die oberflächennachvernetzten wasserabsorbierenden Polymerpartikel werden im Mischer mit einer Geschwindigkeit bewegt, die einer Froude-Zahl von vorzugsweise 0,01 bis 6, besonders bevorzugt 0,05 bis 3, ganz besonders bevorzugt 0,1 bis 0,7, entspricht.

Für Mischer mit horizontal gelagertem Mischwerkzeugen ist die Froude-Zahl wie folgt definiert:

$$Fr = \frac{\omega^2 r}{g}$$

mit

r:     Radius des Mischwerkzeugs

w:      Kreisfrequenz

g:      Erdbeschleunigung:

Der Füllgrad des Mischers beträgt vorzugsweise von 30 bis 80%, besonders bevorzugt von 40 bis 75%, ganz besonders bevorzugt von 50 bis 70%.

Die wässrige Flüssigkeit wird vorzugsweise mittels einer Zweistoffdüse, besonders bevorzugt mittels einer innenmischenden Zweistoffdüse, aufgesprüht.

Zweistoffdüsen ermöglichen eine Zerstäubung in feine Tröpfchen bzw. einen Sprühnebel. Als Zerstäubungsform wird ein kreisförmiger oder auch elliptischer Voll- oder Hohlkegel ausgebildet. Zweistoffdüsen können außenmischend oder innenmischend gestaltet werden. Bei den außenmischenden Zweistoffdüsen verlassen Flüssigkeit und Zerstäubergas den Düsenkopf über separate Öffnungen. Sie werden erst nach dem Austritt aus der Sprühdüse im Sprühstrahl gemischt. Dies ermöglicht eine im weiten Bereich unabhängige Regelung von Tropfengrößenverteilung und Durchsatz. Der Sprühkegel der Sprühdüse kann über die Luftklappenstellung eingestellt werden. Bei der innenmischenden Zweistoffdüse werden Flüssigkeit und Zerstäubergas innerhalb der Sprühdüse vermischt und das Zweiphasengemisch verlässt den Düsenkopf über dieselbe Bohrung (bzw. über mehrere parallel geschaltete Bohrungen). Bei der innenmischenden Zweistoffdüse sind die Mengen- und Druckverhältnisse stärker gekoppelt als bei der außenmischenden Sprühdüse. Geringe Veränderungen im Durchsatz führen deshalb zur Änderung der Tropfengrößenverteilung. Die Anpassung an den gewünschten Durchsatz erfolgt über den gewählten Querschnitt der Düsenbohrung.

Als Zerstäubergas kommen Pressluft, Stickstoff oder Dampf von 0,5 bar und mehr in Frage. Die Tröpfchengröße kann individuell über das Verhältnis von Flüssigkeit zu Zerstäubergas sowie Gas- und Flüssigkeitsdruck eingestellt werden.

In einer besonders bevorzugten Ausführungsform wird die Flüssigkeit unterhalb der Produktbettoberfläche der bewegten Polymerpartikelschicht versprüht, vorzugsweise mindestens 10 mm, besonders bevorzugt mindestens 50 mm, ganz besonders bevorzugt mindestens 100 mm, d.h. die Sprühdüse taucht in das Produktbett ein.

Die Produktbettoberfläche ist die Grenzfläche, die sich zwischen den im Mischer bewegten oberflächennachvernetzten wasserabsorbierenden Polymerpartikeln und der überlagernden Atmosphäre einstellt.

Im Horizontalmischer beträgt der Winkel zwischen der Mischerachse und der Zuführung der Sprühdüse vorzugsweise ca. 90°. Die Flüssigkeit kann senkrecht von oben zugeführt werden. Ein Zuführung schräg von der Seite ist ebenfalls möglich, wobei der Winkel gegenüber der Senkrechten vorzugsweise zwischen 60 und 90°, besonders bevorzugt zwischen 70 und 85°, ganz besonders bevorzugt zwischen 75 und 82,5°, liegt. Die schräge Anordnung der Zuführung ermöglicht die Verwendung kürzerer Zuführungen und damit geringere mechanische Belastungen während des Betriebs des Mischers.

In einer besonders bevorzugten Ausführungsform befindet sich die Sprühdüse unterhalb der Rotationsachse und sprüht in Rotationsrichtung. Durch diese Anordnung werden die beschichteten wasserabsorbierenden Polymerpartikel optimal von der Sprühdüse weggefördert. In Kombination mit der schrägen Anordnung ist es auch möglich die Sprühdüse während des Betriebs des Mischers auszutauschen, ohne dass Produkt austritt.

In einer weiteren bevorzugten Ausführungsform der vorliegenden Erfindung wird mindestens eine Sprühdüse thermisch isoliert und/oder begleitbeheizt.

Thermisch isoliert bedeutet, dass die äußere Oberfläche der Sprühdüse zumindest teilweise eine weitere Materialschicht aufweist, wobei das Material der weiteren Materialschicht eine geringere Wärmeleitfähigkeit aufweist als das Material der Sprühdüse. Die Wärmeleitfähigkeit des Materials der weiteren Materialschicht bei 20°C beträgt vorzugsweise weniger als 2 $Wm^{-1}K^{-1}$, besonders bevorzugt weniger als 0,5 $Wm^{-1}K^{-1}$, ganz besonders bevorzugt weniger als 0,1 $Wm^{-1}K^{-1}$.

Begleitbeheizt bedeutet, dass der Sprühdüse zusätzlich Wärmeenergie zugeführt wird, beispielsweise mittels elektrischer Energie oder mittels eines von einem Wärmeträger durchströmten Heizmantels. Geeignete Wärmeträger sind handelsübliche Wärmeträgeröle, wie Marlotherm®, Dampf oder Warmwasser.

Eine mögliche Wärmezufuhr über einen der beim Mischen eingesetzten Einsatzstoffe, d.h. oberflächennachvernetzte wasserabsorbierende Polymerpartikel oder zu versprühende Flüssigkeit, ist keine Begleitbeheizung im Sinne der vorliegenden Erfindung.

Die Temperatur der Sprühdüse ist vorzugsweise von 1 bis 20°C, besonders bevorzugt von 2 bis 15°C, ganz besonders bevorzugt von 5 bis 10°C, höher als die Temperatur der oberflächennachvernetzten wasserabsorbierenden Polymerpartikel.

Im Falle einer thermisch isolierten Sprühdüse ist die Temperatur der zu versprühenden Flüssigkeit vorzugsweise von 1 bis 20°C, besonders bevorzugt von 2 bis 15°C, ganz besonders bevorzugt von 5 bis 10°C, höher als die Temperatur der oberflächennachvernetzten wasserabsorbierenden Polymerpartikel. Die Temperatur der zu versprühenden Flüssigkeit entspricht ungefähr der Temperatur der Sprühdüse.

Im Falle einer begleitbeheizten und optional thermisch isolierten Sprühdüse beträgt die Temperaturdifferenz zwischen den oberflächennachvernetzten wasserabsorbierenden Polymerpartikeln und der aufzusprühenden Flüssigkeit vorzugsweise weniger als 20°C, bevorzugt weniger als 10°C, besonders bevorzugt weniger als 5°C, ganz bevorzugt weniger als 2°C.

Die Temperaturdifferenz zwischen der aufzusprühenden Flüssigkeit und dem Zerstäubergas beträgt vorzugsweise weniger als 20°C, bevorzugt weniger als 10°C, besonders bevorzugt weniger als 5°C, ganz bevorzugt weniger als 2°C.

Geeignete wässrige Flüssigkeiten sind beispielsweise Dispersionen anorganischer inerter Substanzen, Lösungen oder Dispersionen kationischer Polymere, Lösungen zwei- oder mehrwertiger Metallkationen, sowie Polyole oder deren Lösungen. Die erfindungsgemäß einzusetzenden wässrigen Flüssigkeiten enthalten vorzugsweise mindestens 50 Gew.-%, besonders bevorzung mindestens 70 Gew.-%, ganz besondersbevorzugt mindestens 90 Gew.-%, Wasser.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm$^2$ durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit und der in der Monomerlösung enthaltende Polymerisationsinhibitor deaktiviert werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße (Feinkorn) an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 μm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel (Feinkorn) niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 μm, beträgt vorzugsweise mindestens 90 Gew.-%, besonders bevorzugt mindesten 95 Gew.-%, ganz besonders bevorzugt mindestens 98 Gew.-%.

Vorteilhaft beträgt der Anteil an Partikeln mit einer Partikelgröße von höchstens 600 μm, vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel werden zur weiteren Verbesserung der Eigenschaften oberflächennachvernetzt. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 $C_1$ Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Glyzerin, Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Karbonat, Hydrogenkarbonat, Nitrat, Phosphat, Hydrogenphosphat, Dihydrogenphosphat und Carboxylat, wie Acetat und Laktat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel werden zur weiteren Verbesserung der Eigenschaften beschichtet oder nachbefeuchtet. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Geeignete anorganische inerte Substanzen sind Silikate, wie Montmorillonit, Kaolinit und Talk, Zeolithe, Aktivkohlen, Polykieselsäuren, Magnesiumcarbonat, Calciumcarbonat, Bariumsulfat, Aluminiumoxid, Titandioxid und Eisen-(II)-oxid. Bevorzugt gelangen Polykieselsäuren zum Einsatz, die je nach Herstellungsart zwischen Fällungskieselsäuren und pyrogenen Kieselsäuren unterschieden werden. Beide Varianten sind unter den Namen Silica FK, Sipernat®, Wessalon® (Fällungskieselsäuren) bzw. Aerosil® (pyrogene Kieselsäuren) kommerziell erhältlich. Die anorganischen inerten Substanzen können als Dispersion in einem wässrigen oder wassermischbaren Dispergiermittel eingesetzt werden.

Werden die wasserabsorbierenden Polymerpartikel mit einem anorganischen inerten Material beschichtet, so beträgt die Einsatzmenge an anorganischem inerten Material bezogen auf die wasserabsorbierenden Polymerpartikel vorzugsweise von 0,05 bis 5 Gew.-%, besonders bevorzugt von 0,1 bis 1,5 Gew.-%, ganz besonders bevorzugt von 0,3 bis 1 Gew.-%.

Geeignete organische Materialien sind Polyalkylmethacrylate oder Thermoplaste, wie Polyvinylchlorid.

Geeignete kationische Polymere sind Polyalkylenpolyamine, kationischen Derivate von Polyacrylamiden, Polyethylenimine und polyquartäre Amine.

Polyquartäre Amine sind beispielsweise Kondensationsprodukte aus Hexamethylendiamin, Dimethylamin und Epichlorhydrin, Kondensationsprodukte aus Dimethylamin und Epichlorhydrin, Copolymere aus Hydroxyethylcellulose und Diallyldimethylammoniumchlorid, Copolymere aus Acrylamid und $\alpha$-Methacrylyloxyethyltrimethylammoniumchlorid, Kondensationsprodukte aus Hydroxyethylcellulose, Epichlorhydrin und Trimethylamin, Homopolymere von Diallyldimethylammoniumchlorid und Additionsprodukte von Epichlorhydrin an Amidoamine. Des Weiteren können polyquartäre Amine durch Umsetzung von Dimethylsulfat mit Polymeren, wie Polyethyleniminen, Copolymere aus Vinylpyrrolidon und Dimethylaminoethylmethacrylat oder Copolymere aus Ethylmethacrylat und Diethylaminoethylmethacrylat erhalten werden. Die polyquartären Amine sind in einem breiten Molekulargewichtsbereich verfügbar.

Es ist aber auch möglich die kationische Polymere auf der Partikeloberfläche zu erzeugen, entweder durch Reagenzien, die mit sich selbst ein Netzwerk bilden können, wie Additionsprodukte von Epichlorhydrin an Polyamidoamine, oder durch die Auftragung von kationischen Polymeren, die mit einem zugesetzten Vernetzer reagieren können, wie Polyamine oder Polyimine in Kombination mit Polyepoxiden, multifunktionellen Estern, multifunktionellen Säuren oder multifunktionellen (Meth)acrylaten.

Zum Einsatz gelangen können alle multifunktionellen Amine mit primären oder sekundären Aminogruppen, wie Polyethylenimin, Polyallylamin und Polylysin. Die gemäß dem erfindungsgemäßen Verfahren versprühte Flüssigkeit enthält vorzugsweise mindestens ein Polyamin, beispielsweise Polyvinylamin.

Die kationischen Polymere können als Lösung in einem wässrigen oder wassermischbaren Lösungsmittel, als Dispersion in einem wässrigen oder wassermischbaren Dispergiermittel oder in Substanz eingesetzt werden.

Werden die wasserabsorbierenden Polymerpartikel mit einem kationischen Polymer beschichtet, so beträgt die Einsatzmenge an kationischem Polymere bezogen auf die wasserabsorbierenden Polymerpartikel vorzugsweise von 0,1 bis 15 Gew.-%, besonders bevorzugt von 0,5 bis 10 Gew.-%, ganz besonders bevorzugt von 1 bis 5 Gew.-%.

Werden die wasserabsorbierenden Polymerpartikel mit einem kationischen Polymer beschichtet, so beträgt die Verweilzeit der wasserabsorbierenden Polymerpartikel beim Aufsprühen des kationischen Polymers vorzugsweise von 2 bis 50%, besonders bevorzugt von 5 bis 30%, ganz besonders bevorzugt von 10 bis 25%, der Gesamtverweilzeit im Mischer.

Geeignete zwei- oder mehrwertige Metallkationen sind $Mg^{2+}$, $Ca^{2+}$, $Al^{3+}$, $Sc^{3+}$, $Ti^{4+}$, $Mn^{2+}$, $Fe^{2+/3+}$, $Co^{2+}$, $Ni^{2+}$, $Cu^{+/2+}$, $Zn^{2+}$, $Y^{3+}$, $Zr^{4+}$, $Ag^+$, $La^{3+}$, $Ce^{4+}$, $Hf^{4+}$, und $Au^{+/3+}$, bevorzugte Metallkationen sind $Mg^{2+}$, $Ca^{2+}$, $Al^{3+}$, $Ti^{4+}$, $Zr^{4+}$ und $La^{3+}$, besonders bevorzugte Metallkationen sind $Al^{3+}$, $Ti^{4+}$ und $Zr^{4+}$. Die Metallkationen können sowohl allein als auch im Gemisch untereinander eingesetzt werden. Von den genannten Metallkationen sind alle Metallsalze geeignet, die eine ausreichende Löslichkeit in dem zu verwendenden Lösungsmittel besitzen. Besonders geeignet sind Metallsalze mit schwach komplexierenden Anionen, wie Chlorid, Nitrat und Sulfat. Die Metallsalze werden vorzugsweise als Lösung eingesetzt. Als Lösungsmittel für die Metallsalze können Wasser, Alkohole, Dimethylformamid, Dimethylsulfoxid sowie Mischungen davon eingesetzt werden. Besonders bevorzugt sind Wasser und Wasser/Alkohol-Mischungen, wie Wasser/Methanol oder Wasser/Propylenglykol.

Die gemäß dem erfindungsgemäßen Verfahren versprühte Flüssigkeit enthält vorzugsweise mindestens ein mehrwertiges Metallkation, beispielsweise $Al^{3+}$.

Werden die wasserabsorbierenden Polymerpartikel mit einem mehrwertiges Metallkation beschichtet, so beträgt die Einsatzmenge an mehrwertigem Metallkation bezogen auf die wasserabsorbierenden Polymerpartikel vorzugsweise von 0,05 bis 5 Gew.-%, besonders bevorzugt von 0,1 bis 1,5 Gew.-%, ganz besonders bevorzugt von 0,3 bis 1 Gew.-%.

Werden die wasserabsorbierenden Polymerpartikel mit einem mehrwertigen Metallkation beschichtet, so beträgt die Verweilzeit der wasserabsorbierenden Polymerpartikel beim Aufsprühen des mehrwertigen Metallkations vorzugsweise von 1 bis 30%, besonders bevorzugt von 2 bis 20%, ganz besonders bevorzugt von 5 bis 15%, der Gesamtverweilzeit im Mischer. Vorteilhaft wird das mehrwertige Metallkation vor dem kationischen Polymer dosiert.

Besonders geeignete Polyole sind Polyethylenglykole mit einem Molekulargewicht von 400 bis 20000 g/mol, Polyglyzerin, 3- bis 100-fach ethoxylierte Polyole, wie Trimethylolpropan, Glyzerin, Sorbitol und Neopentylglykol. Besonders geeignet sind 7- bis 20-fach ethoxyliertes Glyzerin oder Trimethylolpropan, wie beispielsweise Polyol TP 70® (Perstorp AB, Perstorp, SE). Letztere haben insbesondere den Vorteil, dass sie die Oberflächenspannung eines wässrigen Extrakts der wasserabsorbierenden Polymerpartikel nur unwesentlich herabsetzen. Die Polyole werden vorzugsweise als Lösung in wässrigen oder wassermischbaren Lösungsmittel eingesetzt.

Die gemäß dem erfindungsgemäßen Verfahren versprühte Flüssigkeit enthält vorzugsweise mindestens ein Polyol, beispielsweise Polyethylenglykol.

Werden die wasserabsorbierenden Polymerpartikel mit einem Polyol beschichtet, so beträgt die Einsatzmenge an Polyol bezogen auf die wasserabsorbierenden Polymerpartikel vorzugsweise von 0,005 bis 2 Gew.-%, besonders bevorzugt von 0,01 bis 1 Gew.-%, ganz besonders bevorzugt von 0,05 bis 0,5 Gew.-%.

Werden die wasserabsorbierenden Polymerpartikel mit einem Polyol beschichtet, so beträgt die Verweilzeit der wasserabsorbierenden Polymerpartikel beim Aufsprühen des Polyols vorzugsweise von 20 bis 80%, besonders bevorzugt von 30 bis 70%, ganz besonders bevorzugt von 40 bis 60%, der Gesamtverweilzeit im Mischer. Vorteilhaft wird das Polyol nach dem kationischen Polymer dosiert.

Die gemäß dem erfindungsgemäßen Verfahren hergestellten wasserabsorbierenden Polymerpartikel weisen einen Feuchtegehalt von vorzugsweise 1 bis 15 Gew.-%, besonders bevorzugt 1,5 bis 10 Gew.-%, ganz besonders bevorzugt 2 bis 8 Gew.-%, auf, wobei der Wassergehalt gemäß der von der EDANA empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 63,0 $g/cm^2$ von typischerweise mindestens 10 g/g, vorzugsweise mindestens 15 g/g, bevorzugt mindestens 18 g/g, besonders bevorzugt mindestens 20 g/g, ganz besonders bevorzugt mindestens 22 g/g, auf. Die Absorption unter einem Druck von 63,0 $g/cm^2$ der wasserabsorbierenden Polymerpartikel beträgt üblicherweise weniger als 35 g/g. Die Absorption unter einem Druck von 63,0 $g/cm^2$ wird analog der von der EDANA empfohlenen Testmethode Nr. WSP 242.2-05 "Absorption under Pressure" bestimmt, wobei statt eines Drucks von 21,0 $g/cm^2$ ein Druck von 63,0 $g/cm^2$ eingestellt wird.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymerpartikel werden vor der Messung gut durchmischt.

Flüssigkeitsweiterleitung (Saline Flow Conductivity)

Die Flüssigkeitsweiterleitung (SFC) einer gequollenen Gelschicht unter Druckbelastung von 0,3 psi (2070 Pa) wird, wie in EP 0 640 330 A1 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$SFC\ [cm^3s/g] = (Fg(t=0)xL0)/(dxAxWP),$$

wobei Fg(t=0) der Durchfluss an NaCl-Lösung in g/s ist, der anhand einer linearen Regressionsanalyse der Daten Fg (t) der Durchflussbestimmungen durch Extrapolation gegen t=0 erhalten wird, L0 die Dicke der Gelschicht in cm, d die Dichte der NaCl-Lösung in $g/cm^3$, A die Fläche der Gelschicht in $cm^2$ und WP der hydrostatische Druck über der Gelschicht in $dyn/cm^2$.

Staubzahl

Die Staubzahl der wasserabsorbierenden Polymerpartikel wird mit Hilfe des Staubmessgerätes Typ DustView (Palas GmbH, Karlsruhe, DE) ermittelt.

Der mechanische Teil des Messgerätes besteht aus Einfülltrichter mit Klappe, Fallrohr und Staubgehäuse mit herausnehmbarem Staubkasten.

Bei der Bestimmung der Staubzahl werden staubende Anteile von Feststoffen, welche nach definierter Beanspruchung des Materials (freier Fall und Aufprall) entstehen, quantitativ erfasst.

Die Auswertung erfolgt optoelektronisch. Der staubende Feststoffanteil führt zur Abschwächung eines Lichtstrahls, die photometrisch erfasst wird. Die Messwertregistrierung und Auswertung erfolgt in der Steuereinheit. Dabei werden die folgenden Messwerte als Zahlenwert an der Steuereinheit angezeigt:

1. Messwert nach 0,5 Sekunden (Maximalwert)
2. Messwert nach 30 Sekunden (Staubwert)
3. Staubzahl (Summe aus Maximalwert und Staubwert)

Die Staubzahlen werden wie folgt bewertet:

| | | |
|---|---|---|
| Staubzahl | 25 - 100 | staubend bis stark staubend |
| Staubzahl | 12 - 25 | gering staubend bis staubend |
| Staubzahl | 1 - 12 | gering staubend bis quasi staubfrei |
| Staubzahl | $\leq 1$ | staubfrei |

Partikelgrößenverteilung (PSD Particle Size Distribution)

Die Partikelgrößenverteilung der wasserabsorbierenden Polymerpartikel wird analog der von der EDANA empfohlenen Testmethode Nr. WSP 220.2-05 "Particle size distribution" bestimmt.

Zentrifugenretentionskapazität (Centrifuge Retention Capacity)

Die Zentrifugenretentionskapazität (CRC) der wasserabsorbierenden Polymerpartikel wird gemäß der von der EDANA empfohlenen Testmethode Nr. WSP 241.2-05 "Centrifuge Retention Capacity" bestimmt.

Absorption unter einem Druck von 63,0 $g/cm^2$ (Absorption under Pressure)

Die Absorption unter einem Druck von 63,0 $g/cm^2$ (AUL0.9psi) der wasserabsorbierenden Polymerpartikel wird analog der von der EDANA empfohlenen Testmethode Nr. WSP 242.2-05 "Absorption under Pressure" bestimmt, wobei statt eines Drucks von 21,0 $g/cm^2$ (AUL0.3psi) ein Druck von 63,0 $g/cm^2$ (AUL0.9psi) eingestellt wird.

Extrahierbare (Extractables)

Der Anteil an Extrahierbaren der wasserabsorbierenden Polymerpartikel wird gemäß der von der EDANA empfohlenen Testmethode Nr. WSP 270.2-05 "Extractables" bestimmt.

Die EDANA-Testmethoden sind beispielsweise erhältlich bei der EDANA, Avenue Eugene Plasky 157, B-1030 Brüssel, Belgien.

Beispiele

Beispiel 1

Durch kontinuierliches Mischen von entionisiertem Wasser, 50gew..-%iger Natronlauge und Acrylsäure wird eine Acrylsäure/Natriumacrylatlösung hergestellt, so dass der Neutralisationsgrad 65mol-% entsprach. Der Feststoffgehalt der Monomerlösung betrug 40 Gew.-%.

Als mehrfach ethylenisch ungesättigter Vernetzer wurde Polyethylenglykol-400-diacrylat (Diacrylat ausgehend von einem Polyethylenglykol mit einem mittleren Molgewicht von 400 g/mol) verwendet. Die Einsatzmenge betrug 1,35g pro kg Monomerlösung.

Zur Initiierung der radikalischen Polymerisation wurden pro kg Monomerlösung 5,11 g einer 0,33gew.-%igen wässrigen Wasserstoffperoxidlösung, 6,31 g einer 15gew-%igen wässrigen Natriumperoxodisulfatlösung und 4,05 g einer 0,5gew.-%igen Ascorbinsäurelösung eingesetzt.

Der Durchsatz der Monomerlösung betrug 1200 kg/h. Die Reaktionslösung hatte am Zulauf eine Temperatur von 23,5°C.

Die einzelnen Komponenten wurden in folgenden Mengen kontinuierlich in einen Reaktor vom Typ List ORP 250 Contikneter, (LIST AG, Arisdorf, CH) dosiert:

| | |
|---|---|
| 1200 kg/h | Monomerlösung |
| 1,620 kg/h | Polyethylenglykol-400-diacrylat |
| 13,704 kg/h | Wasserstoffperoxidlösung/Natriumperoxodisulfat- Lösung |
| 4,860 kg/h | Ascorbinsäurelösung |

Zwischen dem Zugabepunkt für Vernetzer und den Zugabestellen für die Initiatoren wurde die Monomerlösung mit Stickstoff inertisiert.

Es fand nach ca. 50% der Verweilzeit zusätzlich eine Zudosierung von aus dem Herstellungsprozeß durch Mahlung und Siebung anfallendem Feinkorn (45 kg/h) in den Reaktor statt. Die Verweilzeit der Reaktionsmischung im Reaktor betrug 15 Minuten.

Das erhaltene Produktgel wurde auf einen Bandtrockner aufgegeben. Auf dem Bandtrockner wurde das Polymergel kontinuierlich mit einem Luft/Gasgemisch umströmt und bei 175°C getrocknet. Die Verweilzeit im Bandtrockner betrug 43 Minuten.

Das getrocknete Polymergel wurde gemahlen und auf eine Partikelgrößenfraktion von 150 bis 850$\mu$m abgesiebt. Das so erhaltene Grundpolymer hatte folgende Eigenschaften:

| | |
|---|---|
| CRC: | 32 g/g |
| AUL0.3psi: | 26 g/g |
| Extrahierbare: | 9,8 Gew.-% |
| pH-Wert: | 5,8 |

In einem Schugi Flexomix® vom Typ: FX 160 (Hosokawa-Micron B.V., Doetinchem, NL) wurde das Grundpolymer mit der Oberflächennachvernetzungslösung beschichtet und anschließend direkt in einem NARA-Paddle-Dryer vom Typ NPD 5W8 (GMF Gouda, Waddinxveen, NL) 45 Minuten bei 190°C getrocknet.

Es wurden folgende Mengen in den Schugi Flexomix® dosiert:

| | |
|---|---|
| 500 kg/h | Grundpolymer |
| 25,0 kg/h | Oberflächennachvernetzungslösung |

Die Oberflächennachvernetzungslösung enthielt 2.0 Gew.-% N-Hydroxyethyl-2-oxazolidinon, 97,5 Gew.-% entionisiertes Wasser und 0,5 Gew.-% Sorbitanmonococoat.

Die oberflächennachvernetzten Polymerpartikel wurden anschließend in einem NARA-Paddle-Cooler vom Typ NPD 3W9 (GMF Gouda, Waddinxveen, NL) auf ca. 60°C abgekühlt und anschließend noch einmal auf 150 bis 850 $\mu$m abgesiebt.

Die verwendeten oberflächennachvernetzten wasserabsorbierenden Polymerpartikel hatten folgendes Eigenschaftsprofil:

| | |
|---|---|
| CRC: | 26,5 g/g |
| AUL0.9psi: | 21 g/g |
| SFC: | 120x10$^{-7}$ cm$^3$s/g |
| Extrahierbare: | 7,8 Gew.-% |
| >850$\mu$m | 0,7 Gew.-% |
| 600-850$\mu$m | 31,3 Gew.-% |

(fortgesetzt)

| 300-600$\mu$m | 50,5 Gew.-% |
|---|---|
| 90-300$\mu$m | 17,3 Gew.-% |
| <90$\mu$m | 0,2 Gew.-% |

Beispiel 2

Die oberflächennachvernetzten wasserabsorbierenden Polymerpartikel wurden in einem Ruberg-Durchlaufmischer Typ DLM 350-1500 (Gebrüder Ruberg GmbH & Co KG, Nieheim, DE) mittels einer Zweistoffdüse Typ RZD1-H (Gebrüder Ruberg GmbH & Co KG, Nieheim, DE) mit eine 50 gew.-%igen wässrigen Lösung von Lupamin® 9095 (BASF Aktiengesellschaft, Ludwigshafen, DE) beschichtet. Lupamin® 9095 ist ein hochmolekulares lineares Polyvinylamin.

Der Durchlaufmischer war waagerecht aufgestellt (0° Steigung) und hatte eine Sperrluftspülung. Das Mischkammervolumen betrug 140 l. Der Füllgrad des Durchlaufmischers betrug 60% und die Drehzahl betrug 43 min$^{-1}$. Die Froude-Zahl der bewegten oberflächennachvernetzten wasserabsorbierenden Polymerpartikel betrug 0,36.

Die Zweistoffdüse war horizontal eingebaut. Der Abstand von der Stirnwand des Durchlaufmischers betrug 375 mm und der horizontale Abstand des Düsenmunds von der Mischerwand betrug 50 mm. Der Düsenkopf befand sich 150 mm unterhalb der Produkbettoberfläche. Die Sprühdüse hatte eine elektrische Begleitheizung. Die Begleitheizung wurde so geregelt, dass die Düsentemperatur 60°C betrug Der Vordruck des Zerstäubergases (Stickstoff) betrug 4,8 bar. Der Durchsatz an Zerstäubergas betrug 12 kg/h.

Der Durchsatz an wasserabsorbierenden Polymerpartikeln betrug 180 kg/h. Die Temperatur der wasserabsorbierenden Polymerpartikel betrug 60°C.

Der Durchsatz der Beschichtungslösung betrug 7,2 kg/h. Die Temperatur der Beschichtungslösung betrug 60°C.

Es wurde ein mit einer Antihaftbeschichtung versehener Durchlaufmischer (Polytetrafluorethylen; Randwinkel 110°) und ein unbeschichteter Durchlaufmischer (Randwinkel 26°) eingesetzt. Die Innenwand des unbeschichteten Durchlaufsmischers war aus nichtrostendem Stahl (Werkstoffnummer. 1.4571). Die Durchlaufmischer wurden mehrere Stunden störungsfrei betrieben.

Die beschichteten wasserabsorbierenden Polymerpartikel wurden analysiert. Die Ergebnisse sind in der Tabelle 1 zusammengefasst.

Tab. 1: Beschichtung mit Lupamin® 9095

| | unbeschichtete Polymerpartikel | beschichtete Polymerpartikel Mischer mit Antihaftbeschichtung | beschichtete Polymerpartikel unbeschichteter Mischer |
|---|---|---|---|
| CRC [g/g] | 27 | 26 | 27 |
| AUL0.9psi [g/g] | 21 | 19 | 20 |
| SFC [$10^{-7}$ cm$^3$s/g] | 130 | 280 | 390 |
| >850 $\mu$m | 0,7 Gew.-% | 14 Gew.% | 0,8 Gew.-% |

Beispiel 3

Es wurde verfahren wie unter Beispiel 2. Zusätzlich wurde mittels einer zweiten Zweistoffdüse mit einer 20 gew.-%igen wässrigen Lösung von Polyethylenglykol-400 (Polyethylenglykol mit einem mittleren Molgewicht von 400 g/mol) beschichtet.

Die zweite Zweistoffdüse war ebenfalls horizontal eingebaut. Der Abstand von der Stirnwand des Durchlaufmischers betrug 750 mm und der horizontale Abstand des Düsenmunds von der Mischerwand betrug 50 mm. Der Düsenkopf war vollständig in die wasserabsorbierenden Polymerpartikel eingetaucht.

Der Durchsatz der zweiten Beschichtungslösung betrug 1,35 kg/h. Die Temperatur der Beschichtungslösung betrug 20°C.

Die beschichteten wasserabsorbierenden Polymerpartikel wurden analysiert. Die Ergebnisse sind in der Tabelle 2 zusammengefasst.

Tab. 2: Beschichtung mit Lupamin® 9095 und Polyethylenglykol-400

|  | unbeschichtete Polymerpartikel | beschichtete Polymerpartikel Mischer mit Antihaftbeschichtung | beschichtete Polymerpartikel unbeschichteter Mischer |
|---|---|---|---|
| CRC [g/g] | 27 | 26 | 26 |
| AUL0.9psi [g/g] | 21 | 21 | 21 |
| SFC [$10^{-7}$ cm$^3$s/g] | 130 | 170 | 190 |
| Staubzahl | 3-4 | 1-2 | <0 |

Beispiel 4

Es wurde verfahren wie unter Beispiel 3. Zusätzlich wurde mittels einer dritten Zweistoffdüse mit einer 23,9 gew.-%igen wässrigen Lösung von Aluminiumsulfat beschichtet.

Die dritte Zweistoffdüse war ebenfalls horizontal eingebaut. Der Abstand von der Stirnwand des Durchlaufmischers betrug 150 mm und der horizontale Abstand des Düsenmunds von der Mischerwand betrug 50 mm. Der Düsenkopf war vollständig in die wasserabsorbierenden Polymerpartikel eingetaucht.

Der Durchsatz der dritten Beschichtungslösung betrug 7,2 kg/h. Die Temperatur der Beschichtungslösung betrug 20°C.

Die beschichteten wasserabsorbierenden Polymerpartikel wurden analysiert. Die Ergebnisse sind in der Tabelle 3 zusammengefasst.

Tab. 3: Beschichtung mit Lupamin® 9095, Polyethylenglykol-400 und Aluminiumsulfat

|  | unbeschichtete Polymerpartikel | beschichtete Polymerpartikel Mischer mit Antihaftbeschichtung | beschichtete Polymerpartikel unbeschichteter Mischer |
|---|---|---|---|
| CRC [g/g] | 27 | 24 | 23 |
| AUL0.9psi [g/g] | 21 | 17 | 17 |
| SFC [$10^{-7}$ cm$^3$s/g] | 130 | 410 | 460 |

Beispiel 5

Es wurde die Rauhigkeit und der Randwinkel gegenüber Wasser verschiedener nichtrostender Stähle untersucht. Die Ergebnisse sind in Tabelle 4 zusammengefasst:

Tab. 4: Oberflächenrauigkeit und Randwinkel

|  | Oberflächenrauigkeit | Randwinkel |
|---|---|---|
| Werkstoffnummer 1.4541 roh (matt) | 3,048 μm | 74,0° |
| poliert | 0,789 μm | 21,0° |
| aufgeraut (Körnung 120) | 1,708 μm | 69,7° |
| Werkstoffnummer 1.4571 roh (matt) | 1,332 μm | 62,3° |
| poliert | 0,368 μm | 25,7° |
| aufgeraut (Körnung 120) | 1,761 μm | 67,7° |

**Patentansprüche**

1. Verfahren zur Herstellung wasserabsorbierender Polymerpartikel durch Polymerisation einer Monomerlösung oder -suspension, enthaltend

a) mindestens ein ethylenisch ungesättigtes, säuregruppentragendes Monomer, das zumindest teilweise neutralisiert sein kann,

b) mindestens einen Vernetzer,

c) mindestens einen Initiator,

d) optional ein oder mehrere mit den unter a) genannten Monomeren copolymerisierbare ethylenisch ungesättigte Monomere und

e) optional ein oder mehrere wasserlösliche Polymere,

umfassend Trocknung, Mahlung, Klassierung, und Oberflächennachvernetzung, wobei in einem kontinuierlichen Horizontalmischer mit bewegten Mischwerkzeugen mittels mindestens einer Sprühdüse eine wässrige Flüssigkeit auf die oberflächennachvernetzten wasserabsorbierenden Polymerpartikel aufgesprüht wird, **dadurch gekennzeichnet, dass** die produktberührte Innenwand des Mischers gegenüber Wasser einen Randwinkel von weniger als 80° aufweist.

2. Verfahren gemäß Anspruch 1, **dadurch gekennzeichnet, dass** die wasserabsorbierenden Polymerpartikel durch Ausbildung kovalenter Bindungen oberflächennachvernetzt wurden.

3. Verfahren gemäß Anspruch 1 oder 2, **dadurch gekennzeichnet, dass** bei der Oberflächennachvernetzung zusätzlich polyvalente Kationen eingesetzt wurden.

4. Verfahren gemäß einem der Ansprüche 1 bis 3, **dadurch gekennzeichnet, dass** die produktberührte Innenwand des Mischers aus einem nichtrostenden Stahl ist.

5. Verfahren gemäß einem der Ansprüche 1 bis 4, **dadurch gekennzeichnet, dass** die dem Mischer zugeführten wasserabsorbierenden Polymerpartikel eine Temperatur von 40 bis 80°C aufweisen.

6. Verfahren gemäß einem der Ansprüche 1 bis 5, **dadurch gekennzeichnet, dass** die Verweilzeit der wasserabsorbierenden Polymerpartikel im Mischer von 1 bis 180 Minuten beträgt.

7. Verfahren gemäß einem der Ansprüche 1 bis 6, **dadurch gekennzeichnet**, die Umfangsgeschwindigkeit der Mischwerkzeuge im Mischer von 0,1 bis 10 m/s beträgt und die wasserabsorbierenden Polymerpartikel im Mischer mit einer Geschwindigkeit bewegt werden, die einer Froude-Zahl von 0,01 bis 6 entspricht.

8. Verfahren gemäß einem der Ansprüche 1 bis 7, **dadurch gekennzeichnet, dass** der Füllgrad des Mischers von 30 bis 80% beträgt und die Flüssigkeit mindestens 10 mm unterhalb der Produktbettoberfläche versprüht wird.

9. Verfahren gemäß einem der Ansprüche 1 bis 8, **dadurch gekennzeichnet, dass** die mindestens eine Sprühdüse begleitbeheitzt ist.

10. Verfahren gemäß einem der Ansprüche 1 bis 9, **dadurch gekennzeichnet, dass** die wasserabsorbierenden Polymerpartikel eine Zentrifugenretentionskapazität von mindestens 15 g/g aufweisen.

**Claims**

1. A process for preparing water-absorbing polymer particles by polymerizing a monomer solution or suspension comprising

a) at least one ethylenically unsaturated monomer which bears acid groups and may be at least partly neutralized,

b) at least one crosslinker,

c) at least one initiator,

d) optionally one or more ethylenically unsaturated monomers copolymerizable with the monomers mentioned under a) and

e) optionally one or more water-soluble polymers,

comprising drying, grinding, classifying and surface postcrosslinking, an aqueous liquid being sprayed onto the surface postcrosslinked water-absorbing polymer particles by means of at least one spray nozzle in a continuous horizontal mixer with moving mixing tools, wherein the inner wall of the mixer which is in contact with the product has a contact angle of less than 80° with respect to water.

2. The process according to claim 1, wherein the water-absorbing polymer particles have been surface postcrosslinked by formation of covalent bonds.

3. The process according to claim 1 or 2, wherein polyvalent cations have been used additionally in the surface postcrosslinking.

4. The process according to any of claims 1 to 3, wherein the inner wall of the mixer which is in contact with the product is made from a stainless steel.

5. The process according to any of claims 1 to 4, wherein the water-absorbing polymer particles fed to the mixer have a temperature of 40 to 80°C.

6. The process according to any of claims 1 to 5, wherein the residence time of the water-absorbing polymer particles in the mixer is from 1 to 180 minutes.

7. The process according to any of claims 1 to 6, wherein the peripheral speed of the mixing tools in the mixer is from 0.1 to 10 m/s, and the water-absorbing polymer particles in the mixer are moved at a speed which corresponds to a Froude number of 0.01 to 6.

8. The process according to any of claims 1 to 7, wherein the fill level of the mixer is from 30 to 80% and the liquid is sprayed at least 10 mm below the product bed surface.

9. The process according to any of claims 1 to 8, wherein the at least one spray nozzle is trace-heated.

10. The process according to any of claims 1 to 9, wherein the water-absorbing polymer particles have a centrifuge retention capacity of at least 15 g/g.

**Revendications**

1. Procédé de fabrication de particules polymères absorbant l'eau par polymérisation d'une solution ou suspension de monomères contenant :

> a) au moins un monomère éthyléniquement insaturé portant des groupes acides, qui peut être neutralisé au moins en partie,
> b) au moins un agent de réticulation,
> c) au moins un initiateur,
> d) éventuellement un ou plusieurs monomères éthyléniquement insaturés copolymérisables avec les monomères indiqués en a), et
> e) éventuellement un ou plusieurs polymères solubles dans l'eau,

comprenant un séchage, un broyage, une classification et une post-réticulation de surface, un liquide aqueux étant pulvérisé sur les particules polymères absorbant l'eau post-réticulées en surface au moyen d'au moins une buse de pulvérisation dans un mélangeur horizontal continu comprenant des outils de mélange mobiles, **caractérisé en ce que** la paroi interne en contact avec le produit du mélangeur présente un angle de contact avec l'eau inférieur à 80°.

2. Procédé selon la revendication 1, **caractérisé en ce que** les particules polymères absorbant l'eau ont été post-réticulées en surface par formation de liaisons covalentes.

3. Procédé selon la revendication 1 ou 2, **caractérisé en ce que** des cations polyvalents ont également été utilisés lors de la post-réticulation de surface.

4. Procédé selon l'une quelconque des revendications 1 à 3, **caractérisé en ce que** la paroi interne en contact avec le produit du mélangeur est en un acier inoxydable.

5. Procédé selon l'une quelconque des revendications 1 à 4, **caractérisé en ce que** les particules polymères absorbant l'eau introduites dans le mélangeur présentent une température de 40 à 80 °C.

**6.** Procédé selon l'une quelconque des revendications 1 à 5, **caractérisé en ce que** le temps de séjour des particules polymères absorbant l'eau dans le mélangeur est de 1 à 180 minutes.

**7.** Procédé selon l'une quelconque des revendications 1 à 6, **caractérisé en ce que** la vitesse périphérique des outils de mélange dans le mélangeur est de 0,1 à 10 m/s et les particules polymères absorbant l'eau se déplacent dans le mélangeur à une vitesse correspondant à un nombre de Froude de 0,01 à 6.

**8.** Procédé selon l'une quelconque des revendications 1 à 7, **caractérisé en ce que** le degré de remplissage du mélangeur est de 30 à 80 % et le liquide est pulvérisé au moins 10 mm sous la surface du lit de produit.

**9.** Procédé selon l'une quelconque des revendications 1 à 8, **caractérisé en ce que** la ou les buses de pulvérisation sont chauffées par traçage électrique.

**10.** Procédé selon l'une quelconque des revendications 1 à 9, **caractérisé en ce que** les particules polymères absorbant l'eau présentent une capacité de rétention centrifuge d'au moins 15 g/g.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0450923 A2
- DE 102004026934 A1
- WO 9849221 A1
- EP 0780424 A1
- WO 2008113788 A2
- WO 2008113789 A1
- WO 2008113790 A1
- WO 2004037900 A1
- DE 19813443 A1
- WO 2007065840 A1
- EP 450923 A2
- EP 343919 A2
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1
- US 6241928 B
- WO 2008040715 A2
- WO 2008052971 A1
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C
- DE 19854573 A1
- DE 19854574 A1
- DE 10204937 A1
- DE 10334584 A1
- EP 1199327 A2
- WO 2003031482 A1
- DE 3713601 A1
- EP 0640330 A1

**In der Beschreibung aufgeführte Nicht-Patentliteratur**

- **F.L. BUCHHOLZ ; A.T. GRAHAM.** Modern Super-absorbent Polymer Technology. Wiley-VCH, 1998, 71-103